(19) Europäisches Patentamt
European Patent Office
Office européen des brevets

(11) **EP 4 390 771 A1**

(12) **EUROPEAN PATENT APPLICATION**

(43) Date of publication:
**26.06.2024   Bulletin 2024/26**

(21) Application number: **22216264.6**

(22) Date of filing: **22.12.2022**

(51) International Patent Classification (IPC):
***G06N 3/08*** *(2023.01)*

(52) Cooperative Patent Classification (CPC):
**G06N 3/08;** G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Applications Mobiles Overview Inc.
Montreal, Quebec H3J 1R4 (CA)**

(72) Inventors:
  • **WARSHE, Wrushabh
    Montreal, H3J 1R4 (CA)**

  • **LAMBERT, Jules
    Montreal, H3J 1R4 (CA)**
  • **MAJEWSKI, Yann
    Montreal, H3J 1R4 (CA)**
  • **MARTIN, Bryan
    Montreal, H3J 1R4 (CA)**
  • **ABUELWAFA, Sherif Esmat Omar
    Montreal, H3C 0L7 (CA)**
  • **JUPPE, Laurent
    Montreal, H3J 2P7 (CA)**

(74) Representative: **BCF Global
Centre d'Entreprise et d'Innovation
56, Bd Niels Bohr
CS 52132
69603 Villeurbanne Cedex (FR)**

(54)    **SYSTEM AND METHOD FOR TRAINING A MACHINE LEARNING ALGORITHM**

(57)    Methods and processors for training a Machine Learning Algorithm (MLA) are disclosed. The method includes generating a second object using a first object, generating a third object using the first object, acquiring a fourth object having a shape that is different to the shape of the first object. The first, second, third, and fourth objects form a training example. The method includes generating labels for respective pairs of objects in the training example. A given label being indicative of an optimization goal for a training distance between training embeddings to be generated by the MLA for a respective pair of objects. The method includes generating by the MLA training embeddings for respective objects in the training example, determining training distances between training embeddings for the respective pairs of objects from the training example, and training the MLA by using a loss function based on the training distances and the labels.

*FIG. 2A*

EP 4 390 771 A1

**Description**

**FIELD**

The present technology relates to systems and method for obtaining an objects-of-interest recognition operation by applying embedded learning techniques.

**BACKGROUND**

Creating and augmenting an objects-of-interest statistical model based on embedded learning techniques is a difficult task. Conventional solutions are not cost-efficient and require specialized, cumbersome and costly techniques in terms of hardware requirement and software complexity.

Even though the recent developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

**SUMMARY**

Embodiments of the present technology have been developed based on developers' appreciation of at least one technical problem associated with the prior art solutions.

In some embodiments of the present technology, developers have devised a recognition engine for industrial objects. It should be noted that respective clients of the recognition engine may store their own datasets of "objects" to be recognized. In some cases, different models may be trained on respective client datasets for generating client-specific models for the respective clients.

Developers of the present technology have realized that such an approach requires considerable computer resources and may be a time intensive process. In at least some embodiments of the present technology, developers have devised methods for training a single machine learning model on different client datasets and which can be used for object recognition purposes on different datasets. It can be said that such a machine learned model may be referred to as a "cross-client" model that can be employed on datasets of more than one client.

Developers of the present technology have also realized that training of machine learning models often requires large amounts of training data. To that end, developers have devised methods and processors for generating, in a sense, "synthetic" training examples that would allow the machine learning model to increase its predicative performance. Developers have realized that generation of such training examples allows mitigating a problem of limited availability of training data and which is rooted in computer-implemented technologies.

In some embodiments of the present technology, it is contemplated that generating such synthetic examples may allow building an augmented dataset for training the machine learning model. This may allow the machine learned model to be applied on a plurality of different datasets. A so-trained machine learning model may be employed, instead of employing a plurality of client specific models. Employing the machine learned model trained based on the augmented dataset may requires less computational resources during training and inference phases, if compared to training and using the plurality of client-specific models.

In some embodiments of the present technology, training examples may be generated prior to execution of a training phase of a machine learning model. In these embodiments, the training examples may be pre-generated and stored in a storage for future use thereof (e.g., training phase of the machine learning model). This approach may be beneficial in those circumstances where training-dedicated computational resources are limited.

In other embodiments, training examples may be generated during execution of the training phase of the machine learning model. This approach may allow generation of additional training data during the training phase and may allow a quicker release of the machine learned model into its production phase (e.g., one or more in-use phases thereof).

Broadly, a training example includes a plurality of objects. The training example is specific to a first object in the plurality of objects. In the context of the present disclosure, the first object may be referred to as a "object-of-interest". It should be noted that at least one object from the training example is generated based on the first object. In should also be noted that at least one other object from the training example is not necessarily generated based on the first object, and is rather selected so as to mismatch the shape of the first object.

In some embodiments, at least one object from the training example may be generated by performing an augmentation routine onto the first object. In other embodiments, at least one object from the training example may be generated by performing a scaling routine onto the first object. In additional embodiments, at least one object from the training example may be generated by performing both an augmentation routine and a scaling routing onto the first object.

In some embodiments, a given object from a training example may be scaled in accordance with a scaling value in a first interval of scaling values. In other embodiments, a given object from a training example may be scaled in accordance with a scaling value in a second interval of scaling values.

In some embodiments, at least one object from the training example may be acquired by determining a shape of the first object, and selecting another object from a database that does not match the shape of the first object. It is contemplated that selection of the other object may be performed based on a class of the first object. For example, if the first object is of a "bolt" class, the second object may be determined by selecting an object that is of a different class such as "screw" class, for example. In at least some embodiments of the present technology, this other object having a shape different from the shape of the first object may be selected so that it has a same scale as the first object.

It is contemplated that labels can be generated for respective pairs of objects in the training example. It should be noted that a given label may be indicative of whether a distance between embeddings to be generated by the machine learning model for the given pair of objects is to be maximized or minimized.

In some embodiments of the present technology, a plurality of training examples may be generated and provided to the machine learning model as a "batch" for processing. In some embodiments, more than one training examples from the batch may contain a same first object. A number of training examples included in a given batch (i.e., batch size) may be determined based on available processing resources for performing training of the machine learning model.

Once the machine learning model is provided with the batch, feature data associated with respective objects are processed for generating respective embeddings. It is contemplated that distances between respective pairs of embeddings may be computed. A loss function may then be used to train the machine learning model based on the distances between respective pairs of embeddings and the corresponding labels for respective pairs of objects.

In a first broad aspect of the present technology, there is provided a computer-implemented method of training a Machine Learning Algorithm (MLA). The method is executable by a processor. The method comprises generating, by the processor, a second object using a first object, the second object having a shape similar to a shape of the first object. The method comprises generating, by the processor, a third object using the first object, the third object having a scale different from a scale of the first object. The method comprises acquiring, by the processor, a fourth object, the fourth object having a shape that is different to the shape of the first object. The first object, the second object, the third object and the fourth object form a training example. The method comprises generating, by the processor, labels for respective pairs of objects in the training example, a given label being indicative of an optimization goal for a training distance between training embeddings to be generated by the MLA for a respective pair of objects. The method comprises generating, by the processor employing the MLA, training embeddings for respective objects in the training example. The method comprises determining, by the processor, training distances between training embeddings for the respective pairs of objects from the training example. The method comprises training, by the processor using a loss function, the MLA based on the training distances and the labels.

In some embodiments of the method, the labels include a first label for a first pair of objects including the first object and the second object, the first label being indicative of that the training distance between the training embeddings to be generated for the first object and the second object by the MLA is to be minimized.

In some embodiments of the method, the labels include a second label for a second pair of objects including the first object and the third object, the second label being indicative of that the training distance between the training embeddings to be generated for the first object and the third object by the MLA is to be maximized.

In some embodiments of the method, the labels include a third label for a third pair of objects including the first object and the fourth object, the third label being indicative of that the training distance between the training embeddings to be generated for the first object and the fourth object by the MLA is to be maximized.

In some embodiments of the method, the labels include a fourth label for a fourth pair of objects including the second object and the third object, the fourth label being indicative of that the training distance between the training embeddings to be generated for the second object and the third object by the MLA is to be maximized.

In some embodiments of the method, the labels include a fifth label for a fifth pair of objects including the second object and the fourth object, the fifth label being indicative of that the training distance between the training embeddings to be generated for the second object and the fourth object by the MLA is to be maximized.

In some embodiments of the method, the labels include a sixth label for a sixth pair of objects including the third object and the fourth object, the sixth label being indicative of that the training distance between the training embeddings to be generated for the third object and the fourth object by the MLA is to be maximized.

In some embodiments of the method, the training example is a first training example, a second training example being formed by a fifth object, a sixth object, a seventh object and an eighth object. The method further comprises generating, by the processor, second labels for respective pairs of objects in the second training example. The method further comprises generating, by the processor employing the MLA, second training embeddings for the second training example. The method further comprises generating, by the processor, second training distances between second training embeddings for respective pairs of objects from the second training example. The method further comprises training, by the processor using the loss function, the MLA based on the second training distances and the second labels.

In some embodiments of the method, the fifth object is the first object.

In some embodiments of the method, the method further comprises generating, by the processor, inter-example labels for respective inter-example pairs of objects, a given inter-example pair of objects including a given object from the first training example, and a given object from the second training example. The method further comprises generating, by the processor, inter-example training distances indicative of training distances between training embeddings for respective inter-example pairs of objects. The method further comprises training, by the processor using the loss function, the MLA based on the inter-example training distances and the inter-example labels.

In some embodiments of the method, the second object is one of a plurality of second objects in the training example.

In some embodiments of the method, the third object is one of a plurality of third objects in the training example.

In some embodiments of the method, the fourth object is one of a plurality of fourth objects in the training example.

In some embodiments of the method, the generating the second object includes randomly selecting, by the processor, a target augmentation routine amongst a plurality of potential augmentation routines, the target augmentation routine including at least one of (i) adding noise to the first object, and (ii) applying a geometric transformation on the first object, and executing, by the processor, the target augmentation routine on the first object for generating the second object.

In some embodiments of the method, the generating the third object includes generating, by the processor, a scaling value for a target scaling routine, the scaling value being based on at least one of: (i) a distribution, (ii) a maximum axial value of a coordinate system defining the first object, (iii) a volume of the first object, and (iv) a geometric transformation on the first object, and executing, by the processor, the target scaling routine on the first object using the scaling value for generating the third object.

In some embodiments of the method, the generating the third object further includes randomly selecting, by the processor, a target augmentation routine amongst a plurality of potential augmentation routines, the target augmentation routine including at least one of (i) adding noise to the first object, and (ii) applying a geometric transformation on the first object, and executing, by the processor, the target augmentation routine in addition to the target scaling routine on the first object for generating the third object.

In some embodiments of the method, the generating the fourth object further includes randomly selecting, by the processor, a target augmentation routine amongst a plurality of potential augmentation routines, the target augmentation routine including at least one of (i) adding noise to the first object, and (ii) applying a geometric transformation on the first object, and executing, by the processor, the target augmentation routine in addition to the target scaling routine on the first object for generating the fourth object.

In some embodiments of the method, the acquiring the fourth object further includes accessing, by the processor, a database storing a plurality of objects, determining, by the processor, a target object amongst a plurality of objects that is of a different class of objects than the first object, and acquiring, by the processor, the target object from the database.

In some embodiments of the method, the fourth object has a scale that is within an acceptable scale interval from the scale of the first object.

In some embodiments of the method, the fourth object has a same scale as the scale of the first object.

In some embodiments of the method, the method further comprises applying the MLA to perform at least one of an operation of recognition, segmentation, identification, referencing, inferencing and classification of at least one in-use object.

In a second broad aspect of the present technology, there is provided a processor for training a Machine Learning Algorithm (MLA). The processor is configured to generate a second object using a first object, the second object having a shape similar to a shape of the first object. The processor is configured to generate a third object using the first object, the third object having a scale different from a scale of the first object. The processor is configured to acquire a fourth object, the fourth object having a shape that is different to the shape of the first object. The first object, the second object, the third object and the fourth object form a training example. The processor is configured to generate labels for respective pairs of objects in the training example, a given label being indicative of an optimization goal for a training distance between training embeddings to be generated by the MLA for a respective pair of objects. The processor is configured to generate, by employing the MLA, training embeddings for respective objects in the training example. The processor is configured to determine training distances between training embeddings for the respective pairs of objects from the training example. The processor is configured to train, by using a loss function, the MLA based on the training distances and the labels.

In some embodiments of the processor, the labels include a first label for a first pair of objects including the first object and the second object, the first label being indicative of that the training distance between the training embeddings to be generated for the first object and the second object by the MLA is to be minimized.

In some embodiments of the processor, the labels include a second label for a second pair of objects including the first object and the third object the second label being indicative of that the training distance between the training embeddings to be generated for the first object and the third object by the MLA is to be maximized.

In some embodiments of the processor, the labels include a third label for a third pair of objects including the first object and the fourth object the third label being indicative of that the training distance between the training embeddings to be generated for the first object and the fourth object by the MLA is to be maximized.

In some embodiments of the processor, the labels include a fourth label for a fourth pair of objects including the second object and the third object the fourth label being indicative of that the training distance between the training embeddings to be generated for the second object and the third object by the MLA is to be maximized.

In some embodiments of the processor, the labels include a fifth label for a fifth pair of objects including the second object and the fourth object the fifth label being indicative of that the training distance between the training embeddings to be generated for the second object and the fourth object by the MLA is to be maximized.

In some embodiments of the processor, the labels include a sixth label for a sixth pair of objects including the third object and the fourth object the sixth label being indicative of that the training distance between the training embeddings to be generated for the third object and the fourth object by the MLA is to be maximized.

In some embodiments of the processor, the training example is a first training example, a second training example being formed by a fifth object, a sixth object, a seventh object and an eighth object. The processor being further configured to generate second labels for respective pairs of objects in the second training example. The processor being further configured to generate, by employing the MLA, second training embeddings for the second training example. The processor being further configured to generate second training distances between second training embeddings for respective pairs of objects from the second training example. The processor being further configured to train, by using the loss function, the MLA based on the second training distances and the second labels.

In some embodiments of the processor, the fifth object is the first object.

In some embodiments of the processor, the processor is further configured to generate inter-example labels for respective inter-example pairs of objects, a given inter-example pair of objects including a given object from the first training example, and a given object from the second training example. The processor being further configured to generate inter-example training distances indicative of training distances between training embeddings for respective inter-example pairs of objects. The processor being further configured to train, by using the loss function, the MLA based on the inter-example training distances and the inter-example labels.

In some embodiments of the processor, the second object is one of a plurality of second objects in the training example.

In some embodiments of the processor, the third object is one of a plurality of third objects in the training example.

In some embodiments of the processor, the fourth object is one of a plurality of fourth objects in the training example.

In some embodiments of the processor, to generate the second object includes the processor configured to randomly select a target augmentation routine amongst a plurality of potential augmentation routines, the target augmentation routine including at least one of (i) adding noise to the first object, and (ii) applying a geometric transformation on the first object, and execute the target augmentation routine on the first object for generating the second object.

In some embodiments of the processor, to generating the third object includes the processor configured to generate a scaling value for a target scaling routine, the scaling value being based on at least one of: (i) a distribution, (ii) a maximum axial value of a coordinate system defining the first object, (iii) a volume of the first object, and (iv) a geometric transformation on the first object, and execute the target scaling routine on the first object using the scaling value for generating the third object.

In some embodiments of the processor, to generate the third object further includes the processor configured to randomly select a target augmentation routine amongst a plurality of potential augmentation routines, the target augmentation routine including at least one of (i) adding noise to the first object, and (ii) applying a geometric transformation on the first object, and execute the target augmentation routine in addition to the target scaling routine on the first object for generating the third object.

In some embodiments of the processor, to generate the fourth object further includes the processor configured to randomly select a target augmentation routine amongst a plurality of potential augmentation routines, the target augmentation routine including at least one of (i) adding noise to the first object, and (ii) applying a geometric transformation on the first object, and executing, by the processor, the target augmentation routine in addition to the target scaling routine on the first object for generating the fourth object.

In some embodiments of the processor, to acquire the fourth object further includes the processor configured to access a database storing a plurality of objects, determine a target object amongst a plurality of objects that is of a different class of objects than the first object, and acquire the target object from the database.

In some embodiments of the processor, the fourth object has a scale that is within an acceptable scale interval from the scale of the first object.

In some embodiments of the processor, the fourth object has a same scale as the scale of the first object.

In some embodiments of the processor, the processor is configured to apply the MLA to perform at least one of an operation of recognition, segmentation, identification, referencing, inferencing and classification of at least one in-use object.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

## BRIEF DESCRIPTION OF THE DRAWINGS

Additional and/or alternative features, aspects, and advantages of embodiments of the present technology will become apparent from the following description, the accompanying drawings, and the appended claims.

FIG. 1 depicts a representative computing environment for executing a method of obtaining a three-dimensional (3D) objects-of-interest training dataset, in accordance with various embodiments of the present technology;

FIG. 2A depicts a training example used to train a machine learning model, in accordance with various embodiments of the present technology.

FIG. 2B depicts a method of training the machine learning model using the training example of FIG. 2A., in accordance with various embodiments of the present technology.

FIG. 2C depicts a method of using the machine learned model, in accordance with various embodiments of the present technology.

FIG. 2D depicts an other method of using the machine learned model, in accordance with various embodiments of the present technology.

FIG. 3A depicts a scheme-block illustration of distance optimization between an object-of-interest contained within a training example and objects contained within other training examples.

FIG. 3B depicts a scheme-block illustration of distance optimization between a similar object-of-interest contained within a training example and objects contained within the other training examples of FIG. 3A.

FIG. 4 depicts a plurality of screenshots of a mobile device used for the recognition of an industrial object, in accordance with at least some embodiments of the present technology.

FIG. 5 depicts a scheme-block illustration of a method executable by a processor of FIG. 1, in accordance with at least some embodiments of the present technology.

## DETAILED DESCRIPTION

Various implementations of the described technology will be described more fully hereinafter with reference to the accompanying drawings. The present technology may, however, be embodied in many different forms and should not be construed as limited to the implementations set forth herein. Rather, these implementations are provided so that the disclosure will be thorough and complete, and will fully convey the scope of the disclosed technology to those skilled in the art. In the drawings, the sizes and relative sizes of layers and regions may be exaggerated for clarity. Like numerals refer to like elements throughout.

It will be understood that, although the terms first, second, third etc. may be used herein to describe various elements, these elements should not be limited by these terms. These terms are used to distinguish one element from another. Thus, a first element discussed below could be termed a second element without departing from the teachings of the disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is only intended to describe particular implementations and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any step diagrams, flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional step labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

In the context of the present technology, an "object" and/or an "object-of-interest" may refer to a digital 2D and/or 3D model, CAD and/or mesh of the object-of-interest under the form of a digital file or a digital group of files that describe the 2D and/or 3D geometry of the object-of-interest. The description of an object's 2D and/or 3D geometry is given in terms of a collection of points in a 2D and/or 3D space (hereafter called "vertices", singular: "vertex"), those vertices being connected or not by various geometry entities such as triangle lines, planar or curved surfaces, etc., 2D and/or 3D models may be created by hand, algorithmically or scanned. The formats of those digital files are numerous and the technology is compatible to the most common ones.

In the context of the present technology, a "3D point cloud" may refer to a simple 3D representation of an object-of-interest where the vertices are not necessarily connected to each other. If they are not connected to each other, the basic information contained in this kind of representation are the coordinates (e.g., x, y, z) within a Cartesian coordinate system of each vertex. Other information may be contained, such as vertices color (e.g., r, g, b) within an RGB color space. A 3D point cloud is the simplest representation of a 3D object-of-interest and the present embodiments are compatible with 3D point clouds. The 3D point cloud is often used as the result of a 3D scanning and a very common format for those files is the Polygon File Format (PLY).

In the context of the present technology, and further within the field of machine learning, an embedding is defined as the process of converting high-dimensional data to low-dimensional data in the form of a vector in such a way that the two are semantically similar.

The present disclosure illustrates embodiments of the technology focusing on algorithmically training a statistical model to create an embedding space to ensure proper training of statistical machine learning models. In so doing, the present technology may therefore provide a cost-efficient approach to the creation of the objects-of-interest training dataset having a large enough number of entries using the objects training dataset with a small number of initial entries which would have otherwise required specialized, cumbersome, and costly techniques in terms of hardware requirement and software complexity. In one context, the MLA may be an objects classifier aiming at identifying objects-of-interest based on point cloud representations of a scanned object. In order to provide sufficient reliability, the MLAs have to be trained on a large database of representations of objects-of-interest, also referred to as objects training dataset.

With these fundamentals in place, we will now consider some non-limiting examples to illustrate various implementations of aspects of the present technology.

Computing Environment

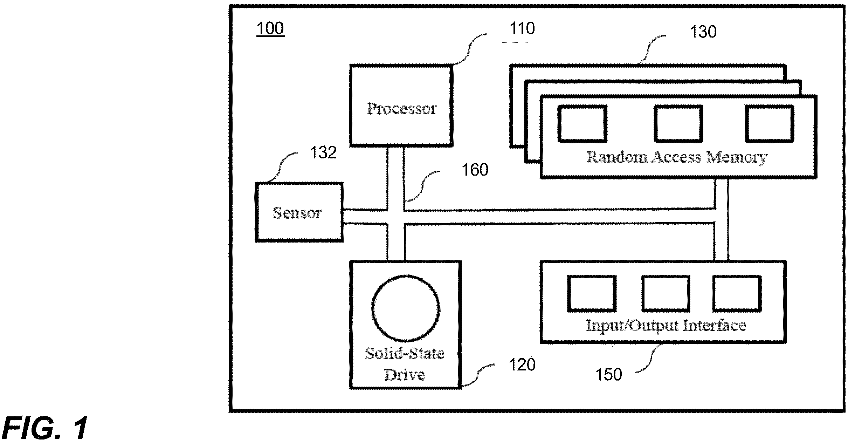

FIG. 1 illustrates a representative computing environment 100, in accordance with an embodiment of the present technology. In some embodiments, the computing environment 100 may be implemented by any of a conventional personal computer, a computer dedicated to generating the 3D representation of objects, a remote server and/or an electronic device, such as, but not limited to, a mobile device, a tablet device, a server, a controller unit, a control device, a monitoring device, etc. and/or any combination thereof appropriate to the relevant task at hand. In some embodiments, the computing environment 100 comprises various hardware components including one or more single or multi-core processors collectively represented by a processor 110, a solid-state drive 120, a random access memory 130, a sensor 132 and an input/output interface 150.

The computing environment 100 may be specifically configured to generate a 3D representation of objects-of-interest. Further, the computing environment 100 may generate 3D point cloud from the 3D representation objects-of-interest. In some alternative embodiments, the computing environment 100 may be a generic computer system, laptop, tablets, smart phones, desktops, or the like.

In some embodiments, the computing environment 100 may also be a sub-system of one of the above-listed systems. In some other embodiments, the computing environment 100 may be an "off the shelf" generic computer system. In some embodiments, the computing environment 100 may also be distributed amongst multiple systems. In some embodiments, the computing environment 100 is virtualized in the "cloud" so that processing power and/or memory capacity may be scaled up or down depending on actual needs for executing implementations of the present technology.

The computing environment 100 may also be specifically dedicated to the implementation of the present technology. In some embodiments, the computing environment 100 may be configured to operate in off-line mode and all the operations may be performed locally on the computing environment 100 without any need of communication with an external server/cloud. In the off-line mode, the computing environment 100 may also be configured to share its data with the server/cloud whenever a connection to the network is ready. In some embodiments, the computing environment 100 may be configured to operate to perform at least some of its operations in online mode that is, the computing environment 100 may be connected to a network to increase processing power and/or memory capacity. As a person in the art of the present technology may appreciate, multiple variations as to how the computing environment 100 is implemented may be envisioned without departing from the scope of the present technology.

Communication between the various components of the computing environment 100 may be enabled by one or more internal and/or external buses 160 (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may allow enabling networking capabilities such as wire or wireless access. As an example, the input/output interface 150 may comprise a networking interface such as, but not limited to, a network port, a network socket, a network interface controller and the like. Multiple examples of how the networking interface may be implemented are apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network, allowing communication among small groups of computers on the same local area network (LAN) and large-scale network communications through routable protocols, such as Internet Protocol (IP).

In accordance with implementations of the present technology, the solid-state drive 120 stores program instructions suitable for being loaded into the random-access memory 130 and executed by the processor 110 for augmenting the 3D objects training dataset. For example, the program instructions may be part of a library, an application, API, framework, software as a service (SaaS) or the like. The solid-state drive 120 may also store various databases including 3D objects training dataset, metadata, user information such as login, activity history or the like.

Training example

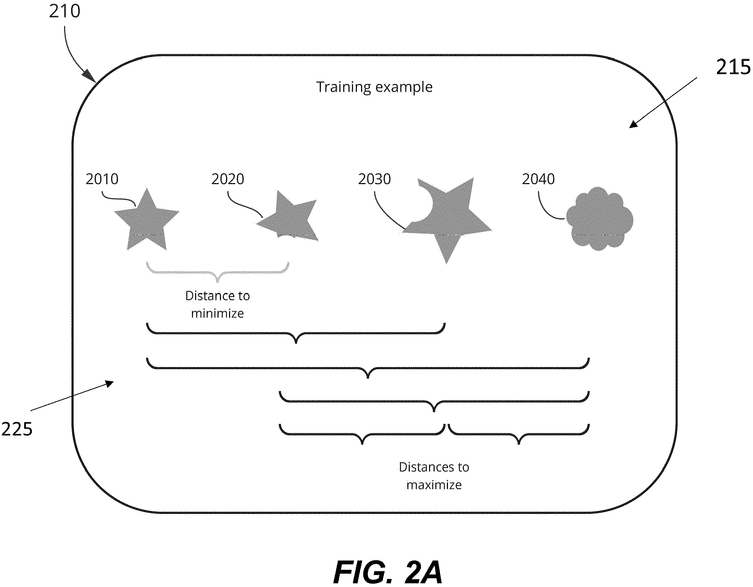

With reference to FIG. 2A, there is depicted a training example 210 that can be generated by the computing environment 100 and suitable for use in accordance with at least some embodiments of the present technology. As shown, the training example 210 comprises a plurality of objects 215 including the object-of-interest 2010, a similar object-of-interest 2020, a negative-scale object-of-interest 2030, and a negative object-of-interest 2040.

Broadly, the processor 110 is configured to generate the training example 210 for the object-of-interest 2010. In some embodiments, the processor 110 may be configured to generate a plurality of training examples for the object-of-interest 2010 in a similar manner to how the processor 110 generates the training example 210 for the object-of-interest 2010. It can be said that the processor 110 may be configured to generate a plurality of training examples, each of which is associated with a respective object-of-interest.

It should be noted that a given one from the plurality of objects 215 is associated with respective feature data. In some implementations, the feature data associated with the plurality of objects 215 contained within a training example 210 may comprise information concerning color, depth, heat, two dimensions (2D), three dimensions (3D), a continuous function, 3D descriptors, spatial distribution, geometric attributes, scale invariant features, shape descriptors, and/or motion.

In some implementations, the associated feature data associated with the plurality of objects 215 contained within a training example 210 further comprises 3D coordinates of the corresponding point of view in a global and/or local coordinate system, 3D coordinates of a set of feature points of the object in the global and/or local coordinate system, the features points of the object being represented by feature data points in a 3D point cloud, for each feature point of the object, a list of 3D coordinates, an entry of said list being 3D coordinates indicative of a position of a corresponding feature data point in the global and/or local coordinate system for a corresponding image, generating, for each feature point of the object, a list of 2D coordinates.

In this embodiment, the processor 110 is configured to generate the similar object-of-interest 2020 using the object-of-interest 2010. To that end, the processor 110 may be configured to apply an augmentation routine onto the object-of-interest 2010 in order to generate the similar object-of-interest 2020.

In some implementations, data augmentation may be applied to the at least one object contained within the at least one training example 210 may include, but is not limited to, various types of noise, and/or geometric transformation, and/or a sampling strategy and/or the creation of holes. Examples of noise may include, but not limited to, White Gaussian noise, Voroni noise and/or Fractal noise. Additionally, common 2D-related noise (e.g., Salt and Pepper, film grain, fixed-pattern, Perlin, simplex and/or Poisson noise). Examples of geometric transformations may include, but are not limited to, changing the size of objects contained within a training example, applying a rotation to objects contained within a training example, applying shifting and/or translation to objects contained within a training example, scaling objects contained within a training example, rotating objects contained within a training example, translating objects contained within a training example, applying a scaling translation to objects contained within a training example, shearing objects contained within a training example, applying a non-uniform scaling to objects contained within a training example, forming a matrix representation of objects contained within a training example, applying a 3D affine transformation to objects contained within a training example, applying matrix operations to objects contained within a training example, applying a reflection to objects contained within a training example, dilating objects contained within a training example, applying a tessellation to objects contained within a training example, applying a projection to objects contained within a training example, or some combination thereof. It is to be noted that any one or more these transformations may be applied and in case of more than one transformation, the order in which these transformations may be applied should not limit the scope of the present disclosure. An example of a sampling strategy, such as but not limited to, farthest point sampling, random sampling, and/or feature-based sampling. In some implementations, data augmentation applied to the at least one object contained within the at least one training example 210 may be excluded.

In this embodiment, the processor 110 may apply a given augmentation routine onto the object-of-interest in order to obtain a "degraded" point cloud representing the similar object-of-interest 2020. For example, a portion of the point cloud representing the object-of-interest 2010 may be removed and a rest of the point cloud may represent the similar object-of-interest 2020.

In other embodiments of the present technology, the processor 110 may be configured to generate a plurality of similar objects-of-interest by applying respective augmentation routines onto the object-of-interest 2010. A first one and a second one from the plurality of similar objects-of-interest may be "degraded" to different extent, without departing from scope of the present technology.

In this embodiment, the processor 110 is configured to generate the negative-scale object-of-interest 2030 using the object-of-interest 2010. To that end, the processor 110 may be configured to apply a scaling routine onto the object-of-interest 2010 in order to generate the negative-scale object-of-interest 2030. For example, the processor 110 may be configured to generate one or more objects in the given training example 210 by adjusting a scale of the object-of-interest 2010 in the training example 210 according to a pre-determined scale.

It some embodiments, it is contemplated that the processor 110 may be configured to generate the negative-scale object-of-interest 2030 by applying one or more of a scaling routine to modify a scale of the object-of-interest 2010, and an augmentation routine to "degrade" the object-of-interest 2010. Additionally or alternatively, the scaling routine may result in an object that is within an acceptable scale interval from the scale of the object-of-interest 2010. For example, the scaling routine may result in an object that is outside an interval of 20% from the scale of the object-of-interest 2010.

In some implementations, the determined scale range and/or value of the plurality of objects contained within the at least one training example 210 is obtained from feature data associated with the at least one object-of-interest 2010 such as but not limited to:

- maximal values of the x, y, and/or z axes of a 3D coordinate system associated to the at least one object-of-interest 2010 according to a following equation:

$$Scale = max\ (y - range * x - range * z - range);$$

- volume of the 3D representation associated with the at least one object-of-interest 2010;

- volume of a CAD model associated with the at least one object-of-interest 2010; and

- any combination thereof.

In some embodiments, it is can be said that some feature data may be indicative of a maximum "axial" value within ranges in x,y,z direction. In other embodiments, it is can be said that some feature data may be indicative of a maximum diagonal value associated with a given obj ect.

In some implementations, the pre-determined scale range and/or value of the plurality of objects contained within the at least one training example 210 is a random distribution associated to the at least one scale associated to the object-of-interest 2010. The distribution may be, but is not limited to: uniform, gaussian, binomial, Lorentz, or any other mathematical distribution. An illustrative example of a scale range and/or value that could be applied to the objects contained within the at least one training example 210 may be the at least one scale range from 1.3 to 1.5 associated to the object-of-interest 2010.

In some implementations, the processor 110 may apply a given scaling routine onto the object-of-interest 2010 in order to obtain a scaled-up version of the object-of-interest 2010. In other implementations, the processor 110 may apply a given scaling routine onto the object-of-interest 2010 in order to obtain a scaled-down version of the object-of-interest 2010.

It is contemplated that the processor 110 may be configured to generate a plurality of scaled versions of the object-of-interest 2010 by applying respective scaling routines onto the object-of-interest 2010. As it will be described in greater details herein further below, the pre-determined scale range and/or value associated with a respective scaled version of the object-of-interest 2010 may affect a label associated with one or more pairs of objects in the training example 210.

In this embodiment, the processor 110 is configured to acquire the negative object-of-interest 2040 to be included in the training example 210. It should be noted that the object-of-interest 210 is associated with a respective class of objects. The processor 110 may select a given negative object-of-interest 2040 as a given object of a different class from the class of the object-of-interest 2010.

In some embodiments, it is contemplated that the processor 110 may be configured to select, from a database, a given negative object-of-interest with a same scale as the object-of-interest 2010. In other embodiment, the processor 110 may be configured to acquire a given negative object-of-interest with a different scale from the scale of the object-of-interest 2010 and perform a scaling routine onto this negative object-of-interest in order to obtain a negative object-of-interest of a same scale as the scale of the object-of-interest 2010.

In some implementations, the scale range and/or value of the at least one negative object-of-interest 2040 that is not obtained from the object-of-interest is not determined and may be different in scale from the object-of-interest 2010.

It can be said that the processor 110 may be configured to generate at least one object from the plurality of objects 215 by metadata associated with the object-of-interest 2010 without necessarily using a 3D cloud of the object-of-interest 2010. In one example, the processor 110 may be configured to generate a first object to be included in the given training example by performing one or more modifications onto the corresponding object-of-interest. In an other example, the processor 110 may be configured to acquire a second object for the given training example that is of a different shape than the object-of-interest.

<u>Training phase</u>

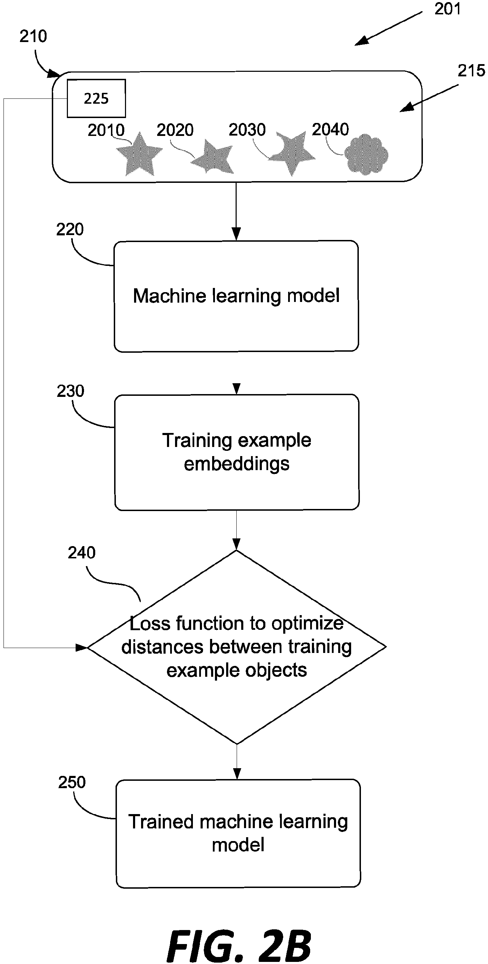

With reference to FIG. 2B, there is depicted a flow diagram of a computer-implemented method 201 executable by the computing environment 100 and suitable for use in accordance with at least some embodiments of the present technology. It is to be expressly understood that the method 201 as depicted are merely an illustrative implementation of the present technology. In some cases, what are believed to be helpful examples of modifications to the method 201 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the computing environment 100 may provide in certain instances simple implementations of the present technology, and that where such is the case they have been presented in this manner as an aid to understanding. As persons skilled in the art would understand, various implementations of the present technology may be of a greater complexity.

In FIG. 2B, there is depicted a flow diagram of the computer-implemented method 201 for training a machine learning model 220, in accordance with the embodiments of the present disclosure. It can be said that the processor 110 may execute the method 201 during a training phase of the machine learning model 220.

In one or more aspects, the method 201, or one or more steps thereof, may be performed by a computer system, such as the computing environment 100. The method 201, or one or more steps thereof, may be embodied in computer-executable instructions that are stored in a computer-readable medium, such as a non-transitory mass storage device, loaded into memory and executed by a CPU. Some steps or portions of steps in the flow diagram may be omitted or changed in order.

Broadly, when executing the method 201, the processor 110 may be configured to:

(i) generate a training example 210;

(ii) provide the training example 210 to the machine learning model 220;

(iii) generate a plurality of training example embeddings 230 using the machine learning model 220;

(iv) apply a loss function 240 onto the training example embeddings 230; and

(v) generating a trained machine learning model 250 by training the machine learning model 220 based on the loss function 240.

Although generation of the training example 210 is illustrated in this embodiment as being performed during the training phase of the machine learning model 220, this may not be the case in each and every embodiment of the present technology.

In other embodiments of the present technology, the processor 110 may be configured to provide a pre-generated training example to the machine learning model 220. In other words, the processor 110 may generate the training example 210 and/or a plurality of other training examples prior to training the machine learning model 220 and store them in memory for future use thereof. Developers of the present technology have realized that employing pre-generated training examples may be beneficial in those circumstances when memory of the computing environment 100 available for the training phase is limited. Additionally or alternatively, the processor 110 may generate the training example 210 during the training phase of the machine learning model 220.

It is contemplated that the processor 110 may train the machine learning model 220 based on a plurality of training examples, including the training example 210. In these embodiments, at least some of the training examples may be pre-generated by the processor 110, while at least some other training examples may be generated by the processor 110 during training of the machine learning model, and without departing from the scope of the present technology.

The processor 110 is configured to employ the machine learning model 220 for generating embeddings for respective objects from the training example 210 based on the respective feature data. Broadly speaking, the machine learning model 220 is configured to create an embedding space for mapping feature data associated with objects to vectors in that embedding space. Generally, embeddings make it easier to perform machine learning on high dimensional inputs. In at least some cases, an embedding can capture some of the semantics of the input by placing semantically similar inputs close together in the created embedding space.

Developers of the present technology have realized that an embedding may be learned and reused across models. It can be said that the purpose of training the machine learning model 220 is to generate an embedding space such that a distance between embeddings for a pair of objects is optimized. In other words, the machine learning model 220 may generate an embedding space in which (i) a distance between embeddings for a pair of semantically similar objects is minimized and (ii) a distance between embeddings for a pair of semantically dissimilar objects is maximised.

How the machine learning model 220 is implemented is not particularly limiting. In some embodiments, the machine learning model 220 which may include at least one algorithmically trained statistical model designed to learn from and/or make predictions on data suitable for use in accordance with at least some embodiments of the present technology. It is contemplated that the machine learning model 220 may be pre-trained based on pre-training data, prior to execution of the method 201.

In at least some embodiments of the present technology, the machine learning model 220 may be implemented as an encoder configured to generate feature data based on input data associated with a given training example and encode the feature data into an embedding. In other embodiments, the feature data may be pre-generated by the processor 110 and the encoder may be configured to encoder the pre-determined feature data associated with the given training example into the embedding.

In one implementation, the encoder may process point clouds as "graph structures" and may employ one or more graph convolution operations. For example, the graph convolution operations may take into account points neighborhood information in order to aggregate and feed forward extracted features through series of cascaded Multi Layer Perceptrons (MLPs). In this example, the encoder may generate an embedding which semantically represents the input in higher dimensional space. The architecture of the machine learning model 200 may also include blocks of 3D geometric operations in order to inject geometric invariance into the architecture.

In some implementations of the present technology, the architecture of the machine learning model 220 may be implemented similarly to the architecture disclosed in an article entitled "PointNet: Deep Learning on Point Sets for 3D Classification and Segmentation", authored by "Qi, Charles R.; Su, Hao; Mo, Kaichun; Guibas, Leonidas J.", published in 2016, the content of which is incorporated herein by reference in its entirety.

In other implementations of the present technology, the architecture of the machine learning model 220 may be implemented similarly to the architecture disclosed in an article entitled "Dynamic graph Cnn for learning on point clouds", authored by "Wang, Yue; Sun, Yongbin; Liu, Ziwei; Sarma, Sanjay E.; Bronstein, Michael M.; Solomon, Justin M.", published in 2019, the content of which is incorporated herein by reference in its entirety.

In further implementations of the present technology, the architecture of the machine learning model 220 may be implemented similarly to the architecture disclosed in an article entitled "PointNet++: Deep hierarchical feature learning on point sets in a metric space", authored by "Qi, Charles R; Yi, Li; Su, Hao; Guibas, Leonidas J", published in 2017, the content of which is incorporated herein by reference in its entirety.

In the embodiment of FIG. 2B, the processor 110 is configured to employ the machine learning model 220 for generating a plurality of training embeddings 230 for the training example 210. In this embodiment, the plurality of training embeddings 230 comprises a given training embedding generated based on feature data of a respective object form the plurality of objects 215. It is contemplated that the plurality of training embeddings 230 may represent feature vectors generated by the machine learning model 220 for respective ones from the plurality of objects 215. In those embodiments where the processor 110 trains the machine learning model 220 based on a plurality of training examples, the machine learning model 220 may be configured to generate embeddings for respective objects from the plurality of training examples.

Distance Calculation

The processor 110 is configured to compute training distances between pairs of training embeddings from the plurality of training embeddings 230. In some embodiments the training distances may be computed as cosine similarities between pairs of training embeddings from the plurality of training embeddings 230. The training distances may be computed by the processor 110 in accordance with a following equation (1):

$$d_{AB} = 1 - \frac{A \cdot B}{|A||B|} \qquad (1)$$

wherein $d$ is a distance that is based on an angle between training embeddings $A$ and $B$. It is contemplated that a search may be constrained to a surface of a sphere in a D dimensional space, where D is the dimension of the training embeddings from the plurality of training embeddings 230.

As it will become apparent from the description herein further below, the training objective of maximizing, or otherwise minimizing, the mathematical distance between training embeddings generated by the machine learning model 220 for a given pair of objects during a given iteration may depend on *inter alia* which objects from the training example 210 are included in the given pair of objects. It is contemplated that the given pair of objects may include any pair of the object-of-interest 2010, the similar object-of-interest 2020, the negative-scale object-of-interest 2030, and/or object-of-interest 2040. This information regarding optimization objective for a given pair of objects may be accessible by the processor 110 from the label data 225 associated with the training example 210.

Loss function

As seen in FIG. 2B, the processor 110 may be configured to use the loss function 240 for the training the machine learning model 220 based on the label data 225 (e.g., plurality of labels) and the training distances for respective pairs of training embeddings form the plurality of training embeddings 230. The loss function 240 is employed to train the machine learning model 220 to optimize training distances between pairs of training embeddings from the plurality of training embeddings 230.

In some embodiments, the processor 110 may be configured employ the loss function 240 for:

- training the machine learning model 220 to minimize the mathematical distance between the at least one object-of-interest 2010 and the at least one similar object-of-interest 2020;
- training the machine learning model 220 to maximize the mathematical distance between the at least one object-of-interest 2010 and the at least one negative-scale object-of-interest 2030;
- training the machine learning model 220 to maximize the mathematical distance between the at least one object-of-interest 2010 and the at least one negative object-of-interest 2040;
- training the machine learning model 220 to maximize the mathematical distance between the at least one similar object-of-interest 2020 and the at least one negative-scale object-of-interest 2030;
- training the machine learning model 220 to maximize the mathematical distance between the at least one similar object-of-interest 2020 and the at least one negative object-of-interest 2040; and
- training the machine learning model 220 to maximize the mathematical distance between the at least one negative-scale object-of-interest 2030 and the at least one negative object-of-interest 2040.

In at least some embodiments of the present technology, the loss function 240 may be implemented as a combination of (i) a loss function for pairs of objects including the object-of-interest 2010, and (ii) a loss function for pairs of objects including the similar object-of-interest 2020. For example, the loss function 240 may be implemented in accordance with a following equation (2):

$$L = L_{object-of-interest} + L_{similar\ object-of-interest} \qquad (2)$$

The loss function for pairs of objects including the object-of-interest 2010 may be defined as follows:

$$L_{object-of-interest} = -\log\left(\frac{e^{-\frac{d_{a-p}}{T}}}{\sum_n e^{-\frac{d_{a-n}}{T}}}\right) \qquad (3)$$

wherein:

- $d_{a-p}$ represents the distance between the object-of-interest 2010 and the similar object-of-interest 2020 to be minimized;
- $d_{a-n}$ represents the distance between the object-of-interest 2010 and the negative-scale object-of-interest 2030 to be maximized;
- $d_{a-n}$ represents the distance between the object-of-interest 2010 and the negative object-of-interest 2040 to be maximized;
- $d_{a-n}$ represents the distance between the object-of-interest 3101 and the plurality of objects contained within the plurality of training examples 311, 312 and/or 313 and is to be maximized; and

- n represents the index of the negative-scale object-of-interest 2030 and/or and the negative object-of-interest 2040.

The loss function for pairs of objects including the similar object-of-interest 2020 may be defined as follows:

$$ L_{similar\ object\text{-}of\text{-}interest} = -\log\left(\frac{e^{-\frac{d_{a-p}}{T}}}{\sum_k e^{-\frac{d_{p-k}}{T}}}\right) \tag{4} $$

wherein:

- $d_{a\text{-}p}$ represents the distance between the object-of-interest 2010 and the similar object-of-interest 2020 to be minimized;
- $d_{p\text{-}k}$ represents the distance between the similar object-of-interest 2020 and the negative-scale object-of-interest 2030 to be maximized;
- $d_{p\text{-}k}$ represents the distance between the similar object-of-interest 2020 and the negative object-of-interest 2040 to be maximized;
- $d_{p\text{-}k}$ represents the distance between the similar object-of-interest 3102 and the plurality of objects contained within the plurality of training examples 311, 312 and/or 313 to be maximized; and
- $k$ represents the index of the negative-scale object-of-interest 2030 and/or the negative object-of-interest 2040.

It is contemplated that once the processor 110 used the loss function 240 to train the machine learning model 220 based on the training example 210 (and/or additional training examples), the processor 110 obtains the trained machine learning model 250.

In at least some embodiments of the present technology, the processor 110 can be said to execute one or more training iterations of the machine learning model 220 based on the training example 210. During a given training iteration, the processor 110 may input the machine learning model 220 with feature data associated with a given pair of objects from a plurality of objects 215 in the training example 210. During the given training iteration, the machine learning model 220 may generate a first embedding for a first one from the given pair objects and a second embedding for a second one from the given pair of objects. During the given training iteration, the processor 110 may apply the loss function 240 to train the machine learning model 220 based on a distance between the first and second embeddings and an optimization objective for that given pair of obj ects.

In some embodiments, it can be said that during a given iteration, the processor 110 may be configured to train the machine learning model 220 on a given loss function to optimize a mathematical distance between a pair of objects from the training example 210.

For example, during a first iteration, the processor 110 may be configured to train the machine learning model 220 based on a pair including (i) the object-of-interest 2010 and (ii) the similar object-of-interest 2020 in order to minimize the mathematical distance between a training embedding generated for the object-of-interest 2010 and a training embedding generated for the similar object-of-interest 2020.

In another example, during a second iteration, the processor 110 may be configured to train the machine learning model 220 based on a pair including (i) the object-of-interest 2010 and (ii) the negative-scale object-of-interest 2030 in order to maximize the mathematical distance between a training embedding generated for the obj ect-of-interest 2010 and a training embedding generated for the negative-scale object-of-interest 2030.

In further example, during a third iteration, the processor 110 may be configured to train the machine learning model 220 based on a pair including (i) the object-of-interest 2010 and (ii) the negative object-of-interest 2040 in order to maximize the mathematical distance between a training embedding generated for the object-of-interest 2010 and a training embedding generated for the negative object-of-interest 2040.

In an additional example, during a fourth iteration, the processor 110 may be configured to train the machine learning model 220 based on a pair including (i) the similar object-of-interest 2020 and (ii) the negative-scale object-of-interest 2030 in order to maximize the mathematical distance between a training embedding generated for the similar object-of-interest 2020 and a training embedding generated for the negative-scale object-of-interest 2030.

In an additional example, during a fifth iteration, the processor 110 may be configured to train the machine learning model 220 based on a pair including (i) the similar object-of-interest 2020 and (ii) the negative object-of-interest 2040 in order to maximize the mathematical distance between a training embedding generated for the similar object-of-interest 2020 and a training embedding generated for the negative object-of-interest 2040.

In an additional example, during a sixth iteration, the processor 110 may be configured to train the machine learning model 220 based on a pair including (i) the negative-scale object-of-interest 2030 and (ii) the negative object-of-interest 2040 in order to maximize the mathematical distance between a training embedding generated for the negative-scale object-of-interest 2030 and a training embedding generated for the negative object-of-interest 2040.

Batch of training examples

It is contemplated that in those embodiments where the processor 110 employs a plurality of training examples for training the machine learning model 220, the processor 110 may provide the plurality of training examples to the machine learning model 220 in a form of a "batch".

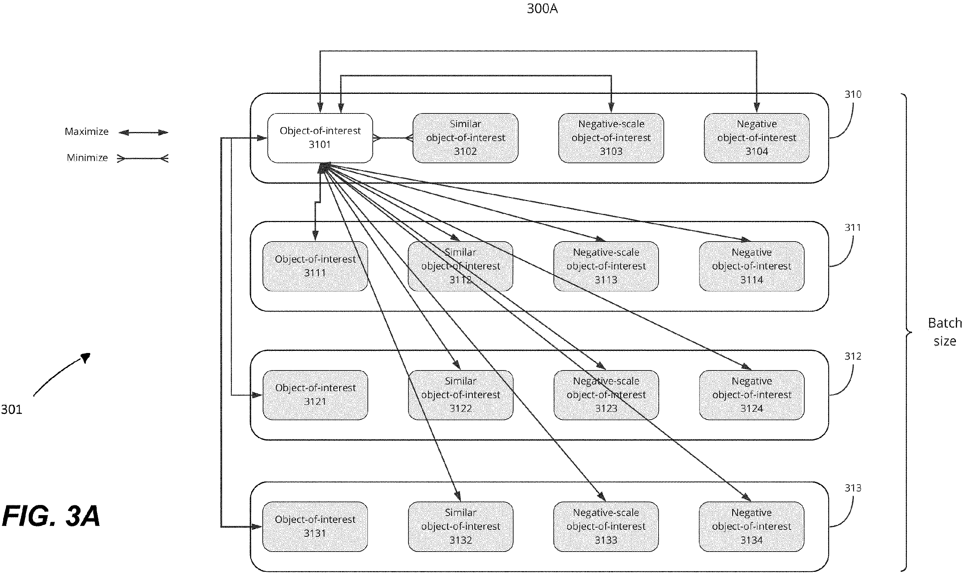

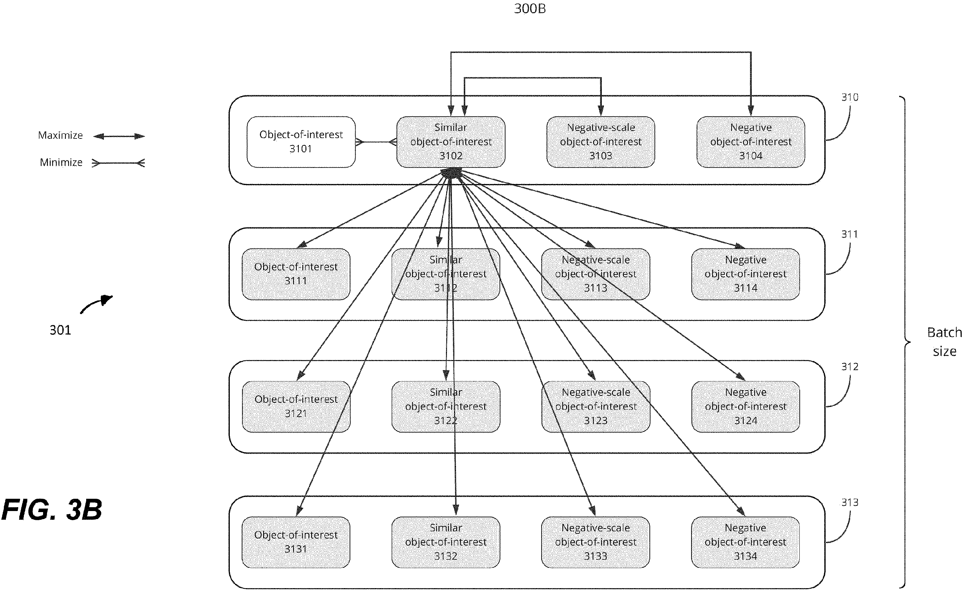

With reference to FIGS. 3A and 3B, there is depicted an illustrative example of a batch 301 that can be used by the processor 110 to train the machine learning model 220. The processor 110 may be configured to generate training examples 310, 311, 312, and 313, similarly to how the processor 110 is configured to generate the training example 210 described above.

The training example 310 comprises an object-of-interest 3101, a similar object-of-interest 3102, a negative-scale object-of-interest 3103, and a negative object-of-interest 3104. The training example 311 comprises an object-of-interest 3111, a similar object-of-interest 3112, a negative-scale object-of-interest 3113, and a negative object-of-interest 3114. The training example 312 comprises an object-of-interest 3121, a similar object-of-interest 3122, a negative-scale object-of-interest 3123, and a negative object-of-interest 3124. The training example 313 comprises an object-of-interest 3131, a similar object-of-interest 3132, a negative-scale object-of-interest 3133, and a negative object-of-interest 3134.

In at least some embodiments, it is contemplated that the object-of-interest 3111 may be identical to any one of the object-of-interests 3111, 3121, and 3131. In other words, the processor 110 may be configured to generate a plurality of training examples for a same object-of-interest, without departing from the scope of the present technology. Although such a plurality of training examples is generated for the same object-of-interest, it is contemplated that the rest of objects in the respective training examples may be different from one another.

The processor 110 may also be configured to group the training examples 310, 311, 312, and 313 into a batch of training examples that is then provided to the machine learning model 220 for training. In at least some embodiments of the present technology, the processor 110 may be configured to select a number of training examples to be included in a given batch based on a currently available processing capacity of the processor 110.

In FIG. 3A, there is depicted an illustrative example of training the machine learning model 220 on the loss function 240 to optimize the mathematical distance between the object-of-interest 3101 contained within training example 310 and the plurality of objects contained within training examples 311, 312 and/or 313.

In FIG. 3B, there is depicted an illustrative example of training the machine learning model 220 on the loss function 240 to optimize the mathematical distance between the similar object-of-interest 3102 contained within training example 310 and the plurality of objects contained within training examples 311, 312 and/or 313.

Recalling that a given training example may be associated with label data indicative of an optimization objectives for respective pairs of objects in the given training example, when the processor 110 provides a plurality of training examples as a batch to the machine learning model 220 for training, the processor 110 may further generate inter-example label data (e.g., a plurality of inter-example labels) indicative of optimization objectives for respective inter-example pairs of objects in which a first one from the inter-example pair and a second one from the inter-example pair are contained in distinct training examples from the plurality of training examples in the batch.

It should be noted that inter-example label data may be generated for pairs of objects including a given object-of-interest, such as illustrated in FIG. 3A. In at least some embodiments, the processor 110 may be configured to employ the loss function 240 in accordance with the equation (3) and where:

- $d_{a\text{-}p}$ represents the distance between the object-of-interest 3101 and the similar object-of-interest 3102 and is to be minimized;

- $d_{a\text{-}n}$ represents the distance between the object-of-interest 3101 and the negative-scale object-of-interest 3103 and is to be maximized, further;

- $d_{a\text{-}n}$ represents the distance between the object-of-interest 3101 and the negative object-of-interest 3104 and is to be maximized;

- $d_{a\text{-}n}$ represents the distance between the object-of-interest 3101 and the plurality of objects contained within the plurality of training examples 311, 312 and/or 313 and is to be maximized; and

- n represents the index of the negative-scale object-of-interest 3103, the negative object-of-interest 3104 and the plurality of objects contained within training examples 311, 312 and/or 313.

It should be noted that inter-example label data may be generated for pairs of objects including a given similar object-of-interest, such as illustrated in FIG. 3B. In at least some embodiments, the processor 110 may be configured to employ the loss function 240 in accordance with the equation (4) and where:

- $d_{a-p}$ represents the distance between the object-of-interest 3101 and the similar object-of-interest 3102 and is to be minimized;

- $d_{p-k}$ represents the distance between the similar object-of-interest 3102 and the negative-scale object-of-interest 3103 and is to be maximized;

- $d_{p-k}$ represents the distance between the similar object-of-interest 3102 and the negative object-of-interest 3104 and is to be maximized;

- $d_{p-k}$ represents the distance between the similar object-of-interest 3102 and the plurality of objects contained within the plurality of training examples 311, 312 and/or 313 to be maximized; and

- $k$ represents the index of the negative-scale object-of-interest 3103 and/or the negative object-of-interest 3104 and the plurality of objects contained within training examples 311, 312 and/or 313.

In some implementations of the equations (3) and/or (4), a sum in the denominator in each of the log terms may include all optimized distances contained within the plurality of training examples.

Developers of the present technology have realized that in some implementations of the present technology, the processor may be configured to monitor and/or control a proportion of (i) pairs of training distances to be minimized and (ii) pairs of training distances to be maximized, during a training phase of the MLA.

In one scenario, the processor may have access to a dataset with a large number of classes of objects with similar shapes, but being at different scales. In this scenario, developers of the present technology have realized that in may be beneficial to provide more training distances between (i) object-of-interest and (ii) negative-scale object-of-interest, than other training distances. Such monitoring and/or control during the training phase may allow the training to, in a sense, "focus" more on the scale aspect of the objects when making a prediction, than the shape.

In an other scenario, the processor may have access to a dataset with a large number of classes of objects with similar scale, but being of different shapes. In this other scenario, developers of the present technology have realized that in may be beneficial to have more training distances between (i) object-of-interest and (ii) similar object-of-interest, than other training distances. Such monitoring and/or control during the training phase may allow the training to, in a sense, "focus" more on the shape of the object when making a prediction, than the scale.

In at least some embodiments of the present technology, the processor 110 may perform control of dataset proportions during an object generation process. During the object generation process, one or more augmented and/or scaled objects can be generated based on a one or more obj ects-of-interest.

In-use phase

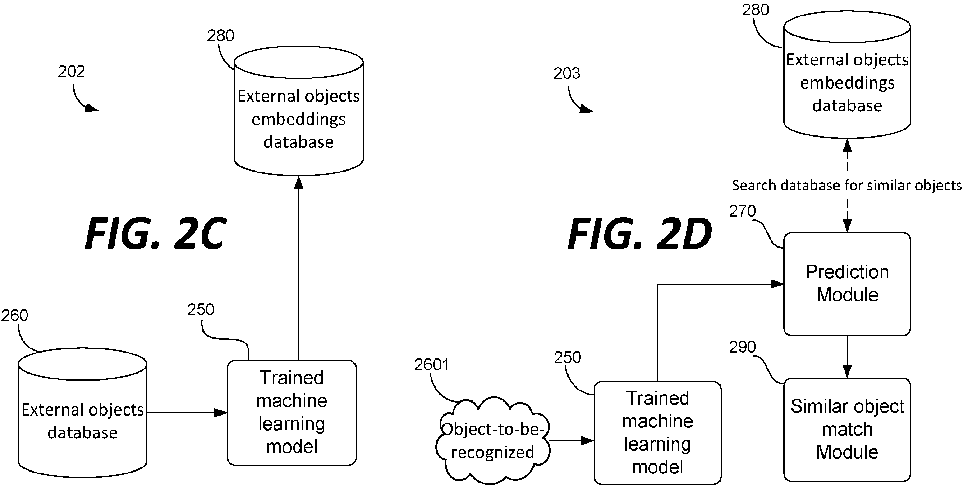

In FIG. 2C, there is depicted a flow diagram of a computer-implemented method 202 executable by the computing environment 100 and suitable for use in accordance with at least some embodiments of the present technology. It is to be expressly understood that the method 202 as depicted are merely an illustrative implementation of the present technology. In some cases, what are believed to be helpful examples of modifications to the method 202 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the computing environment 100 may provide in certain instances simple implementations of the present technology, and that where such is the case they have been presented in this manner as an aid to understanding. As persons skilled in the art would understand, various implementations of the present technology may be of a greater complexity.

In FIG. 2C, there is depicted a flow diagram of the computer-implemented method 202 for using the machine learned model 250, in accordance with the embodiments of the present disclosure. It can be said that the processor 110 may execute the method 202 during a first inference phase of the machine learned model 250.

In one or more aspects, the method 202, or one or more steps thereof, may be performed by a computer system, such as the computing environment 100. The method 202, or one or more steps thereof, may be embodied in computer-executable instructions that are stored in a computer-readable medium, such as a non-transitory mass storage device, loaded into memory and executed by a CPU. Some steps or portions of steps in the flow diagram may be omitted or changed in order.

In some implementations of the method 202, trained machine learning model 250 comprises an algorithmically trained statistical model trained on the at least one loss function, wherein the distance between the at least one embedding associated to a plurality of objects is optimized. The machine learned model 250 may be trained by the processor 110 similarly to what has been described above with reference to FIG. 2B.

In some implementations of the method 202, an external database 260 may contain data associated with the at least one object-of-interest that may include, but is not limited to, a digital 2D and/or 3D model, CAD and/or mesh of the object-of-interest under the form of a digital file or a digital group of files that describe the 2D and/or 3D geometry of the object-of-interest; a 3D point cloud, a 3D representation and/or further information such as vertices, color (e.g., r, g, b) within an RGB color space. Illustrative examples of object representations contained within external objects database 260 may include, but are not limited to, industrial objects such as automotive parts, hardware such as nuts, bolts, screws, couplings, pipe fittings, fittings, tools; human body parts; articles of clothing such as shoes, shirts, trousers, coats, boots, etc.

In some implementations of the method 202, the at least one object-of-interest contained within the external objects database 260 is provided by the processor 110 to the trained machine learning model 250 to obtain the at least one in-use embedding associated with the at least one object-of-interest contained within the external objects database 260. Subsequently, the at least one in-use embedding associated with the at least one object-of-interest contained within external objects database 260 can be stored by the processor 110 in an external object embeddings database 280.

In FIG. 2D, there is depicted a flow diagram of a computer-implemented method 203 executable by the computing environment 100 and suitable for use in accordance with at least some embodiments of the present technology. It is to be expressly understood that the method 203 as depicted are merely an illustrative implementation of the present technology. In some cases, what are believed to be helpful examples of modifications to the method 203 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the computing environment 100 may provide in certain instances simple implementations of the present technology, and that where such is the case they have been presented in this manner as an aid to understanding. As persons skilled in the art would understand, various implementations of the present technology may be of a greater complexity.

In FIG. 2D, there is depicted a flow diagram of the computer-implemented method 203 for using the machine learned model 250, in accordance with the embodiments of the present disclosure. It can be said that the processor 110 may execute the method 203 during a second inference phase of the machine learned model 250.

In one or more aspects, the method 203, or one or more steps thereof, may be performed by a computer system, such as the computing environment 100. The method 203, or one or more steps thereof, may be embodied in computer-executable instructions that are stored in a computer-readable medium, such as a non-transitory mass storage device, loaded into memory and executed by a CPU. Some steps or portions of steps in the flow diagram may be omitted or changed in order.

FIG. 2D shows an object to-be-identified 2601, a prediction module 270, the external object embeddings database 280, and a similar object match module 290. The elements of the method 203 will be described in detail below.

In some implementations of the method 203, the at least one prediction is obtained by the processor providing the object-to-be-recognized 2601 to the trained machine learning model 250. The data contained within the at least one prediction may include, but is not limited to, the at least one embedding associated with object-to-be-recognized 2601.

In some implementations of the method 203, the at least one prediction associated with object-to-be-recognized 2601 may be provided by the processor 110 to the prediction module 270. Broadly speaking, the prediction module 270 comprises one or more algorithm configured to execute a search on the content of the external object embeddings database 280 to obtain the at least one object-of-interest similar to the obj ect-to-be-recognized 2601. In some implementations of the method 203, a similar object match module 290 may contain the at least one similar object obtained by prediction module 270 from external object embeddings database 280.

In at least some embodiments of the present technology, the processor 110 may employ the prediction model 270 and/or the similar object match module 290 to identify top-k number of most similar objects to the object-to-be-recognized 2601. It should be noted that the search may be implemented in a two-tier manner. For example, metadata associated with the object-to-be-recognized 2601 may be used to identify a subset of potential objects that have a same scale, and then the embeddings associated with the subset of potential objects may be compared to the embedding generated for the object-to-be-recognized 2601.

Use case

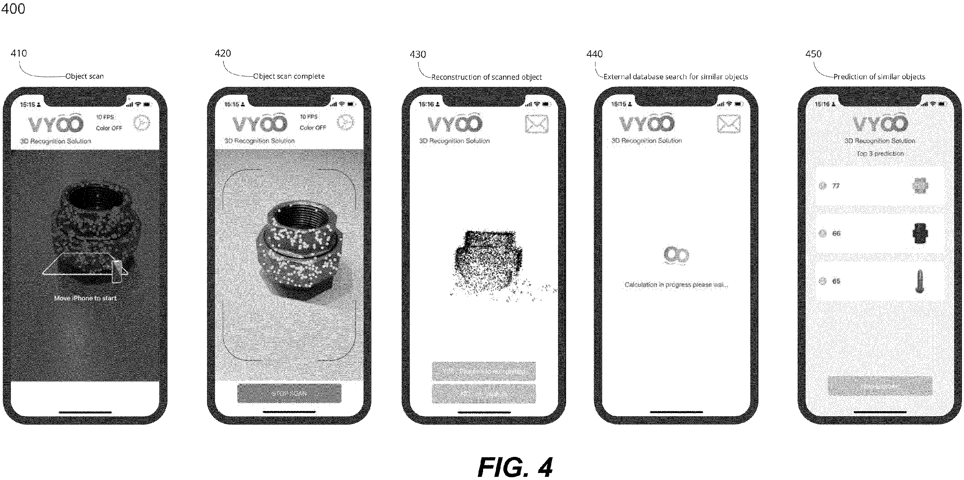

In some implementations, the current technology may be applied to the at least one operation of recognition, segmentation, identification, referencing, inferencing and/or classification of an object-of-interest. FIG. 4 depicts an illustrative example of recognition of an industrial object such as may exist in the activities of selection or search for the purpose of inventory, purchase, identification, etc. The process 400 depicts the current technology executed on an edge device. Object scan 410 depicts an instructional screen for scanning an object-to-be recognized. Object scan complete 420 depicts a screen indicating a completed scan of the object-to-be recognized suitable for use by the current technology. Reconstruction of scanned object 430 displays the reconstructed 3D point cloud of the scanned object. The user is asked to approve the reconstruction of the object or to rescan and/or recapture the object-to-be-recognized. External database search for objects 440 is displayed to the user in the timeframe of prediction module 270 executing a search of external object embeddings database 280 for objects-of-interest similar to the object-to-be recognized. Prediction of similar objects 450 depicts a plurality of objects contained within external object embeddings database 280 that are predicted to be similar to the object-to-be recognized. The predicted objects depicted in 450 are displayed in descending order of statistical match to the scanned object-to-be recognized.

Computer-implemented method

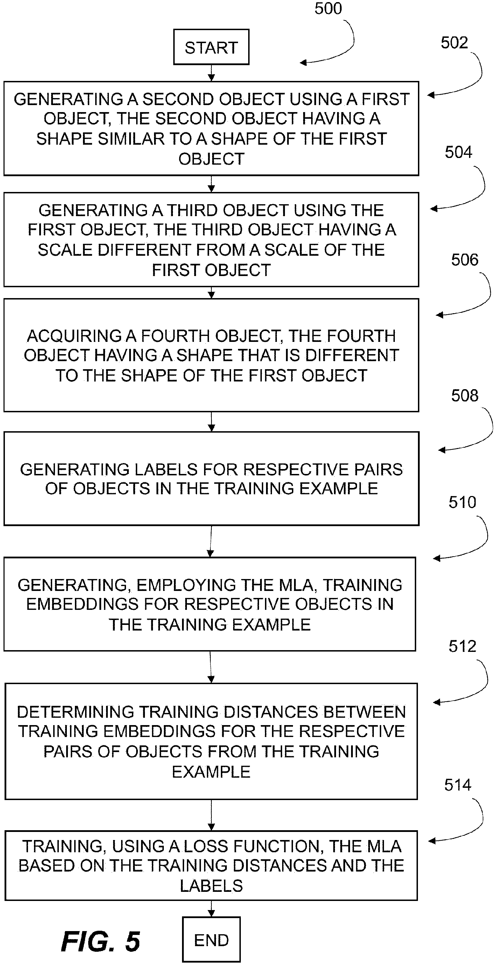

With reference to FIG. 5, there is depicted a scheme-block representation of a computer-implemented method 800 executable by the processor 110. It is contemplated that additional steps may be executable by the processor 110 in addition to those illustrated in FIG. 5. It should also be noted that various steps of the method 500 may be executable by the processor 100 in a different sequence to which they are illustrated in FIG. 5, without departing from the scope of the present technology. Various steps of the method 500 will now be described.

**STEP 502: generating a second object using a first object, the second object having a shape similar to a shape of the first object**

The method 500 begins at step 502 with the processor configured to generate a second object using a first object, and where the second object has a similar shape to a shape of the first object. For example, with reference to FIG. 2A, the processor 110 may be configured to generate the similar object-of-interest 2020 (e.g., the second object) using the object-of-interest 2010 (e.g., the first object). It is contemplated that the processor 110 may be configured to access a database, acquire the first object, and use the first object for generating the second object.
In some embodiments, the processor 110 may be configured to generate a plurality of second objects based on the first object. For example, one or more similar objects-of-interest may be generate based on the object-of-interest 2010.
In at least some embodiments of the present technology, it can be said that the processor 110 may be configured to generate an augmented object based on the first object, and which has a similar shape to the first object.
In further embodiments of the present technology, the processor 110 may be configured to employ a plurality of potential augmentation routines for generating the second object based on the first object. A given potential augmentation routine may include at least one of (i) adding noise to the first object, and (ii) applying a geometric transformation on the first object. In some embodiments, the processor 110 may be configured to randomly select a target augmentation routine amongst the plurality of potential augmentation routines, and execute the target augmentation routine on the first object for generating the second object. It is contemplated that the processor 110 may be configured to generate a "degraded" point cloud for the second object based on a point cloud of the first object. The degraded point cloud may have more, or fewer, data points than the point cloud of the first object, without departing from the scope of the present technology.

**STEP 504: generating a third object using the first object, the third object having a scale different from a scale of the first object**

The method 500 continues to step 504 with the processor 110 configured to generate a third object using the first object, and where the third object has a scale different from the scale of the first object. For example, with reference to FIG. 2A, the processor 110 may be configured to generate the negative-scale object-of-interest 2030 (e.g., the third object) using the object-of-interest 2010 (e.g., the first object). It is contemplated that the processor 110 may be configured to access a database, acquire the first object, and use the first object for generating the third object.

In some embodiments, the processor 110 may be configured to generate a plurality of third objects based on the first object. For example, one or more negative-scale objects-of-interest may be generated based on the object-of-interest 2010.

In at least some embodiments of the present technology, it can be said that the processor 110 may be configured to generate an augmented object based on the first object, and which has a scale different from the scale of the first object.

In further embodiments of the present technology, the processor 110 may be configured to employ a plurality of potential scaling routines for generating the third object based on the first object. A given scaling routine may include at least one of (i) a distribution, (ii) a maximum diagonal value of a coordinate system defining the first object, (iii) a volume of the first object. In some embodiments, the processor 110 may be configured to randomly select a target scaling routine amongst the plurality of potential scaling routines, and execute the target scaling routine on the first object for generating the third object.

The processor 110 may generate a scaling value for the target scaling routine. In some embodiments, the processor 110 may be configured to generate a given scaling value that is outside a given range of scaling values. For example, the processor 110 may generate a scaling value of 20% or more. In another example, the processor 110 may generate a scaling value of 15% or more. In a further example, the processor 110 may generate a scaling value of 10% or more.

It is contemplated that the third object may also be an augmented object. For example, the scaling routine may include an "augmentation sub-routine" based on a geometric transformation on the first object. It is contemplated that the processor 110 may be configured to generate a "degraded" point cloud based on a point cloud of the first object and apply a scaling operation on the degraded point cloud to obtain the third point cloud for the third object, and/or *vice versa*. In some embodiments, it is contemplated that a given third object may be generated based on the second object by performing a scaling routine onto the second object.

## STEP 506: acquiring a fourth object, the fourth object having a shape that is different to the shape of the first object

The method 500 continues to step 506 with the processor 110 configured to acquire a fourth object that has a different shape to a shape of the first object. With reference to FIG. 2A, the processor 110 may be configured to acquire the negative object-of-interest 2040 (e.g., fourth object) that has a different shape from the shape of the object-of-interest 2010 (e.g., the first object).

In some embodiments, the processor 110 may be configured to access a database storing a plurality of objects, determine a target object amongst a plurality of objects that is of a different class of objects than the first object, and acquire the target object from the database. The class of objects associated with the first object may be available to the processor form the metadata associated with the first object.

In some embodiments, the processor 110 may be configured to perform one or more of an augmentation routine and a scaling routine onto the fourth object for generating a modified fourth object. It is contemplated that the scaling value for the scaling routine to be applied onto the third object during generation of the modified fourth object may be within a given scaling interval. For example, the scaling routine to be applied onto the fourth object may be such that the scale of the modified fourth is within 20% from the scale of the first object. It is contemplated that the processor 110 may be configured to acquire a plurality of fourth objects having different shapes from the shape of the first object.

In some embodiments, it is contemplated that the fourth object has a scale that is within an acceptable scale interval from the scale of the first object. In other embodiments, however, the fourth object may have a same scale as the scale of the first object.

It should be noted that the first object, the second object, the third object and the fourth object forming a training example such as, for example, the training example 210 including the object-of-interest 2010, the similar object-of-interest 2020, the negative-scale object-of-interest 2030, and the negative object-of-interest 2040.

It is contemplated that a given training example may be formed by the processor 110 from a plurality of objects. The plurality of objects in the given training example may include at least one first object, a subset of objects that have been generated by augmenting and/or scaling the at least one object, and at least one object that has a different shape from the first object. It should be noted that so-generating training examples allows the model to, in a sense, "learn" how close, or far, embeddings ought to be for a pair of objects based on *inter alia* shape characteristics and scale characteristics for the pair of objects.

## STEP 508: generating labels for respective pairs of objects in the training example

The method 500 continues to step 508 with the processor 110 configured to generate labels for respective pairs of objects in the training example. With reference to FIG. 5, the processor 110 may generate the label data 225 for the plurality of objects 215. A given label may be indicative of an optimization goal for a training distance between training embeddings to be generated by the MLA for a respective pair of objects.

For some pairs of objects, the optimization goal may be minimization of the corresponding training distance. For other pairs of objects, the optimization goal may be maximization of the corresponding training distance. The optimization goal for a given pair of objects depends on *inter alia* which objects are in the given pair of objects. For example, the processor 110 may generate:

- a first label for a first pair of objects including the first object and the second object, the first label being indicative of that the training distance between the training embeddings to be generated for the first object and the second object by the MLA is to be minimized;

- a second label for a second pair of objects including the first object and the third object, the second label being indicative of that the training distance between the training embeddings to be generated for the first object and the third object by the MLA is to be maximized;

- a third label for a third pair of objects including the first object and the fourth object, the third label being indicative of that the training distance between the training embeddings to be generated for the first object and the fourth object by the MLA is to be maximized;

- a fourth label for a fourth pair of objects including the second object and the third object, the fourth label being indicative of that the training distance between the training embeddings to be generated for the second object and the third object by the MLA is to be maximized;

- a fifth label for a fifth pair of objects including the second object and the fourth object, the fifth label being indicative of that the training distance between the training embeddings to be generated for the second object and the fourth object by the MLA is to be maximized; and

- a sixth label for a sixth pair of objects including the third object and the fourth object, the sixth label being indicative of that the training distance between the training embeddings to be generated for the third object and the fourth object by the MLA is to be maximized.

It should be understood that the processor 110 may execute steps 502 to 508 in a different order to the order in which they are listed above. It is contemplated that the processor 110 may be configured to generate a plurality of second objects, a plurality of third objects, idenitify and/or generate a plurality of third objects. The processor 110 may be configured to store a plurality of first objects, the plurality of second objects, the plurality of third objects, and the plurality of fourth objects in a database. The processor 110 may be configured to generate for respective pairs amongst (i) the plurality of first objects, (ii) the plurality of second objects, (iii) the plurality of third objects, and (iv) the plurality of fourth objects, corresponding labels indicative of corresponding optimization goals based on *inter ilia* which objects are in the respective pairs of objects. The processor 110 may then be configured to identify a subset of objects from (i) the plurality of first objects, (ii) the plurality of second objects, (iii) the plurality of third objects, and (iv) the plurality of fourth objects for generating a training example. The processor 110 may then retrieve labels associated with the respective pairs of objects in the subset of objects as label data for that training example.

It is contemplated that the processor 110 may form a second training example in addition to the training example including the first, second, third, and fourth objects. The second training example being formed by a fifth object, a sixth object, a seventh object and an eighth object. The processor 110 may be configured to generate and/or retrieve second labels for respective pairs of objects in the second training example. It is contemplated that the first object may be identical to the first object, but this may not be the case in each and every embodiment of the present technology.

In those embodiments where the processor 110 acquires and/or generate a first training example and a second training example, the processor 110 may further acquire and/or generate inter-example labels for respective inter-example pairs of objects, a given inter-example pair of objects including a given object from the first training example, and a given object from the second training example. For example, with reference to FIG. 3A, the inter-example labels may include a label for an inter-example pair of the object-of-interest 3101 and the similar object-of-interest 3112. In another example, with reference to FIG.3B, the inter-example labels may include a label for an inter-example pair of the similar object-of-interest 3102 and the negative-scale object-of-interest 3123.

**STEP 510: generating, by employing the MLA, training embeddings for respective objects in the training example**

The method 500 continues to step 510 with the processor 110 executing the MLA to generate training embeddings for respective objects in the training example. In those embodiments where the processor 110 generated a second training example, the processor 110 may execute the MLA to generate second training embeddings for objects in the second training example.

**STEP 512: determining training distances between training embeddings for the respective pairs of objects from the training example**

The method 500 continues to step 512 with the processor 110 generating training distances between training embeddings for the respective pairs of objects from the training example. The processor 110 may be configured to generate the training distances in a variety of ways. For example, the processor 110 may be configured to determine a mathematical distance between the training embeddings in the embedding space.

In those embodiments where the processor 110 acquires and/or generates the second training example, the processor 110 may be configured to generate second training distances between second embeddings for respective pairs of objects from the second training example, and to generate inter-example training distances indicative of training distances between training embeddings for respective inter-example pairs of objects.

**STEP 514: training, using a loss function, the MLA based on the training distances and the labels**

The method 500 continues to step 514 with the processor 110 configured to train the MLA by using a loss function based on the training distances and the labels, and/or second training distances and the second labels, and/or the inter-example training distances and the inter-example labels.

It is contemplated that the method 500 may further comprise the processor 110 configured to apply the MLA to perform at least one of an operation of recognition, segmentation, identification, referencing, inferencing and classification of at least one in-use object.

It will be understood that the features and examples above are not meant to limit the scope of the present disclosure to a single implementation, as other implementations are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an implementation showing a singular component should not necessarily be limited to other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description of the specific implementations so fully reveals the general nature of the disclosure that others can, by applying knowledge within the skill of the relevant art(s) (including the contents of any documents cited and incorporated by reference herein), readily modify and/or adapt for various applications such specific implementations, without undue experimentation and without departing from the general concept of the present disclosure. Such adaptations and modifications are therefore intended to be within the meaning and range of equivalents of the disclosed implementations, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s).

While the above-described implementations have been described and shown with reference to particular steps performed in a particular order, it will be understood that these steps may be combined, sub-divided, or re-ordered without departing from the teachings of the present technology. The steps may be executed in parallel or in series. Accordingly, the order and grouping of the steps is not a limitation of the present technology.

Moreover, it should be understood that the various embodiments disclosed by the present disclosure, have been presented by way of example, and not by limitation. It would be apparent to one skilled in the relevant art(s) that various changes in form and detail could be made therein without departing from the spirit and scope of the disclosure. Thus, the present disclosure should not be limited by any of the above-described implementations but should be defined only in accordance with the following claims and their equivalents.

## Claims

1. A computer-implemented method of training a Machine Learning Algorithm (MLA), the method executable by a processor, the method comprising:

generating, by the processor, a second object using a first object, the second object having a shape similar to a shape of the first object;

generating, by the processor, a third object using the first object, the third object having a scale different from a scale of the first object;

acquiring, by the processor, a fourth object, the fourth object having a shape that is different to the shape of the first object,

the first object, the second object, the third object and the fourth object forming a training example;

generating, by the processor, labels for respective pairs of objects in the training example, a given label being indicative of an optimization goal for a training distance between training embeddings to be generated by the MLA for a respective pair of objects;

generating, by the processor employing the MLA, training embeddings for respective objects in the training example;

determining, by the processor, training distances between training embeddings for the respective pairs of objects from the training example;

training, by the processor using a loss function, the MLA based on the training distances and the labels.

2. The method of claim 1, wherein the labels include at least one of:

• a first label for a first pair of objects including the first object and the second object, the first label being indicative of that the training distance between the training embeddings to be generated for the first object and the second object by the MLA is to be minimized;

• a second label for a second pair of objects including the first object and the third object, the second label being indicative of that the training distance between the training embeddings to be generated for the first object and the third object by the MLA is to be maximized;

• a third label for a third pair of obj ects including the first object and the fourth object, the third label being indicative of that the training distance between the training embeddings to be generated for the first object and the fourth object by the MLA is to be maximized;

• a fourth label for a fourth pair of objects including the second object and the third object, the fourth label being indicative of that the training distance between the training embeddings to be generated for the second object and the third object by the MLA is to be maximized;

• a fifth label for a fifth pair of objects including the second object and the fourth object, the fifth label being indicative of that the training distance between the training embeddings to be generated for the second object and the fourth object by the MLA is to be maximized;

• a sixth label for a sixth pair of objects including the third object and the fourth object, the sixth label being indicative of that the training distance between the training embeddings to be generated for the third object and the fourth object by the MLA is to be maximized.

3. The method of any one of claims 1 to 2, wherein the training example is a first training example, a second training example being formed by a fifth object, a sixth object, a seventh object and an eighth object, the method further comprising:

generating, by the processor, second labels for respective pairs of objects in the second training example;

generating, by the processor employing the MLA, second training embeddings for the second training example;

generating, by the processor, second training distances between second training embeddings for respective pairs of objects from the second training example;

training, by the processor using the loss function, the MLA based on the second training distances and the second labels.

4. The method of claim 3, wherein the fifth object is the first object.

5. The method of claim 3, wherein the method further comprises:

generating, by the processor, inter-example labels for respective inter-example pairs of objects, a given inter-example pair of objects including a given object from the first training example, and a given object from the second training example;

generating, by the processor, inter-example training distances indicative of training distances between training embeddings for respective inter-example pairs of objects;

training, by the processor using the loss function, the MLA based on the inter-example training distances and the inter-example labels.

6. The method of any one of claims 1 to 5, wherein the second object is one of a plurality of second objects in the training example, the third object being one of a plurality of third objects in the training example, the fourth object being one of a plurality of fourth objects in the training example.

7. The method of any one of claims 1 to 6, wherein the generating the second object includes:

   randomly selecting, by the processor, a target augmentation routine amongst a plurality of potential augmentation routines, the target augmentation routine including at least one of (i) adding noise to the first object, and (ii) applying a geometric transformation on the first object; and
   executing, by the processor, the target augmentation routine on the first object for generating the second object.

8. The method of any one of claims 1 to 8, wherein the generating the third object includes:

   generating, by the processor, a scaling value for a target scaling routine, the scaling value being based on at least one of: (i) a distribution, (ii) a maximum diagonal value of a coordinate system defining the first object, (iii) a maximum axial value of a coordinate system defining the first object, (iv) a volume of the first object, and (v) a geometric transformation on the first object; and
   executing, by the processor, the target scaling routine on the first object using the scaling value for generating the third object.

9. The method of claim 8, wherein the generating the third object further includes:

   randomly selecting, by the processor, a target augmentation routine amongst a plurality of potential augmentation routines, the target augmentation routine including at least one of (i) adding noise to the first object, and (ii) applying a geometric transformation on the first object; and
   executing, by the processor, the target augmentation routine in addition to the target scaling routine on the first object for generating the third object.

10. The method of any one of claims 1 to 9, wherein the acquiring the fourth object further includes:

    accessing, by the processor, a database storing a plurality of objects;
    determining, by the processor, a target object amongst a plurality of objects that is of a different class of objects than the first object; and
    acquiring, by the processor, the target object from the database.

11. The method of claim 10, wherein the generating the fourth object further includes:

    randomly selecting, by the processor, a target augmentation routine amongst a plurality of potential augmentation routines, the target augmentation routine including at least one of (i) adding noise to the first object, and (ii) applying a geometric transformation on the first object; and
    executing, by the processor, the target augmentation routine in addition to the target scaling routine on the first object for generating the fourth object.

12. The method of any one of claims 1 to 11, wherein the fourth object has a scale that is within an acceptable scale interval from the scale of the first object.

13. The method of claim 12, wherein the fourth object has a same scale as the scale of the first obj ect.

14. The method of any one of claims 1 to 13, further comprising applying the MLA to perform at least one of an operation of recognition, segmentation, identification, referencing, inferencing and classification of at least one in-use object.

15. A processor for training a Machine Learning Algorithm (MLA), the processor being configured to:

    generate a second object using a first object, the second object having a shape similar to a shape of the first object;
    generate a third object using the first object, the third object having a scale different from a scale of the first object;
    acquire a fourth object, the fourth object having a shape that is different to the shape of the first object,

the first object, the second object, the third object and the fourth object forming a training example;

generate labels for respective pairs of objects in the training example, a given label being indicative of an optimization goal for a training distance between training embeddings to be generated by the MLA for a respective pair of objects;

generate, by employing the MLA, training embeddings for respective objects in the training example;

determine training distances between training embeddings for the respective pairs of objects from the training example;

train, by using a loss function, the MLA based on the training distances and the labels.

**FIG. 1**

FIG. 2A

EP 4 390 771 A1

**FIG. 2B**

**FIG. 2C**

**FIG. 2D**

280 External objects embeddings database

202

260 External objects database

250 Trained machine learning model

280 External objects embeddings database

Search database for similar objects

203

270 Prediction Module

290 Similar object match Module

2601 Object-to-be-recognized

250 Trained machine learning model

FIG. 3A

FIG. 3B

300B

Object-of-interest 3101 — Similar object-of-interest 3102 — Negative-scale object-of-interest 3103 — Negative object-of-interest 3104 — 310

Object-of-interest 3111 — Similar object-of-interest 3112 — Negative-scale object-of-interest 3113 — Negative object-of-interest 3114 — 311

Object-of-interest 3121 — Similar object-of-interest 3122 — Negative-scale object-of-interest 3123 — Negative object-of-interest 3124 — 312

Object-of-interest 3131 — Similar object-of-interest 3132 — Negative-scale object-of-interest 3133 — Negative object-of-interest 3134 — 313

Maximize

Minimize

301

Batch size

EP 4 390 771 A1

30

FIG. 4

500

START

502

GENERATING A SECOND OBJECT USING A FIRST OBJECT, THE SECOND OBJECT HAVING A SHAPE SIMILAR TO A SHAPE OF THE FIRST OBJECT

504

GENERATING A THIRD OBJECT USING THE FIRST OBJECT, THE THIRD OBJECT HAVING A SCALE DIFFERENT FROM A SCALE OF THE FIRST OBJECT

506

ACQUIRING A FOURTH OBJECT, THE FOURTH OBJECT HAVING A SHAPE THAT IS DIFFERENT TO THE SHAPE OF THE FIRST OBJECT

508

GENERATING LABELS FOR RESPECTIVE PAIRS OF OBJECTS IN THE TRAINING EXAMPLE

510

GENERATING, EMPLOYING THE MLA, TRAINING EMBEDDINGS FOR RESPECTIVE OBJECTS IN THE TRAINING EXAMPLE

512

DETERMINING TRAINING DISTANCES BETWEEN TRAINING EMBEDDINGS FOR THE RESPECTIVE PAIRS OF OBJECTS FROM THE TRAINING EXAMPLE

514

TRAINING, USING A LOSS FUNCTION, THE MLA BASED ON THE TRAINING DISTANCES AND THE LABELS

*FIG. 5*

END

## EUROPEAN SEARCH REPORT

Application Number

EP 22 21 6264

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Khosla Prannay ET AL: "Supervised contrastive learning", , 10 March 2021 (2021-03-10), pages 1-23, XP093037283, DOI: 10.48550/arXiv.2004.11362 Retrieved from the Internet: URL:https://arxiv.org/pdf/2004.11362.pdf [retrieved on 2023-04-04] * the whole document * ----- | 1-15 | INV. G06N3/08 |
| A | Chen Ting ET AL: "A Simple Framework for Contrastive Learning of Visual Representations", , 1 July 2020 (2020-07-01), pages 1-20, XP093037179, DOI: 10.48550/arXiv.2002.05709 Retrieved from the Internet: URL:https://arxiv.org/pdf/2002.05709.pdf [retrieved on 2023-04-04] * the whole document * ----- | 1-15 | |
| A | JONAS DIPPEL ET AL: "Towards Fine-grained Visual Representations by Combining Contrastive Learning with Image Reconstruction and Attention-weighted Pooling", ARXIV.ORG, CORNELL UNIVERSITY LIBRARY, 201 OLIN LIBRARY CORNELL UNIVERSITY ITHACA, NY 14853, 22 February 2022 (2022-02-22), XP091144022, * the whole document * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 11 April 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 21 6264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LE-KHAC PHUC H ET AL: "Contrastive Representation Learning: A Framework and Review", IEEE ACCESS, IEEE, USA, vol. 8, 16 October 2020 (2020-10-16), pages 193907-193934, XP011818591, DOI: 10.1109/ACCESS.2020.3031549 [retrieved on 2020-10-30] * the whole document * | 1-15 | |
| A | Hoffer Elad ET AL: "Deep Metric Learning Using Triplet Network", ICLR 2015, 4 December 2018 (2018-12-04), XP055913859, Retrieved from the Internet: URL:https://arxiv.org/pdf/1412.6622.pdf [retrieved on 2022-04-20] * the whole document * | 1-15 | |
| A | MIAO YONGWEI ET AL: "ClothingNet: Cross-Domain Clothing Retrieval With Feature Fusion and Quadruplet Loss", IEEE ACCESS, IEEE, USA, vol. 8, 31 July 2020 (2020-07-31), pages 142669-142679, XP011803937, DOI: 10.1109/ACCESS.2020.3013631 [retrieved on 2020-08-11] * the whole document * | 1-15 | TECHNICAL FIELDS SEARCHED (IPC) |

The present search report has been drawn up for all claims

| Place of search | Date of completion of the search | Examiner |
|---|---|---|
| The Hague | 11 April 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QI, CHARLES R. ; SU, HAO ; MO, KAICHUN ; GUIBAS, LEONIDAS J.** *PointNet: Deep Learning on Point Sets for 3D Classification and Segmentation,* 2016

- **WANG, YUE ; SUN, YONGBIN ; LIU, ZIWEI ; SARMA, SANJAY E. ; BRONSTEIN, MICHAEL M. ; SOLOMON, JUSTIN M.** *Dynamic graph Cnn for learning on point clouds,* 2019
- **QI, CHARLES R ; YI, LI ; SU, HAO ; GUIBAS, LEONIDAS J.** *PointNet++: Deep hierarchical feature learning on point sets in a metric space,* 2017